Europäisches Patentamt

**European Patent Office**

**Office européen des brevets**

(19)

(11) Veröffentlichungsnummer: **0 285 788**

**A2**

(12) **EUROPÄISCHE PATENTANMELDUNG**

(21) Anmeldenummer: 88102683.5

(22) Anmeldetag: 24.02.88

(51) Int. Cl.⁴ **B60R 13/10**

(30) Priorität: 10.04.87 DE 3712215

(43) Veröffentlichungstag der Anmeldung:
12.10.88 Patentblatt 88/41

(84) Benannte Vertragsstaaten:
**CH DE IT LI NL SE**

(71) Anmelder: **Hella KG Hueck & Co.**
**Postfach 28 40**
**D-4780 Lippstadt(DE)**

(72) Erfinder: **Thiemann, Hubert**
**Loweg 6**
**D-4780 Lippstadt(DE)**

(54) **Kennzeichenschildhalter für Kraftfahrzeuge mit teleskopartiger Verschiebemöglichkeit.**

(57) Der Kennzeichenschildhalter besteht aus zwei rechteckförmigen, identischen Aufnahmen, die teleskopartig ineinanderverschiebbar sind. Die rechteckförmigen Aufnahmen weisen in etwa mittig und in Verschieberichtung verlaufend eine Stufe auf. Durch diese Stufe ergeben sich auf unterschiedlichem Niveau liegende Flächen. Die auf höherem Niveau liegende Fläche der beiden Aufnahmen dient als Anlagefläche für das Kennzeichenschild. Die Aufnahmen weisen schlitzförmige Ausnehmungen auf, die zwischen den beiden auf unterschiedlichem Niveau liegenden Flächen verlaufen und zur jeweiligen anderen Aufnahme hin geöffnet sind.

EP 0 285 788 A2

## Kennzeichenschildhalter für Kraftfahrzeuge mit teleskopartiger Verschiebemöglichkeit

Die Erfindung betrifft einen Kennzeichenschildhalter für Kraftfahrzeuge mit teleskopartiger Verschiebemöglichkeit, bestehend aus zwei rechteckförmigen Aufnahmen, die zwei in Verschieberichtung verlaufende, schlitzförmige Ausnehmungen aufweisen.

Ein teleskopartig verschiebbarer Kennzeichenschildhalter dieser Art ist aus dem DE-GM 1 900 111 bekannt. Der Kennzeichenschildhalter besteht aus zwei aus Blech hergestellten, rechteckförmigen Aufnahmen, von denen eine über die andere geschoben ist. An den in Verschieberichtung verlaufenden Längsseiten sind in die Aufnahmen Rinnen eingebracht, von denen die untere Aufnahme mit der von der Rinne gebildeten, erhabenen Seite in die Rinne der oberen Aufnahme eingreift. Dadurch sind die beiden Aufnahmen in Verschieberichtung aneinandergeführt. In die untere Aufnahme sind zwei in Verschieberichtung verlaufende, - schlitzförmige Ausnehmungen eingebracht, durch die jeweils ein aus der oberen Aufnahme freigeschnittener und zu den schlitzförmigen Ausnehmungen hin abgewinkelter Lappen durchgesteckt ist, der auf der Rückseite der unteren Aufnahme nach außen hin abgebogen ist. Die Länge der - schlitzförmigen Ausnehmungen entspricht in etwa der Größe des Verschiebeweges des Kennzeichenschildhalters. Bei einem solchen Kennzeichenschildhalter ist es nachteilig, daß er aus zwei im Aufbau unterschiedlichen, rechteckförmigen Aufnahmen besteht und beide Aufnahmen keine in einer Ebene liegende Fläche aufweisen, an der das Kennzeichenschild festsetzbar ist.

Aus dem DE-GM 1 931 814 ist ein teleskopartig verschiebbarer Kennzeichenschildhalter bekannt geworden, der aus zwei im Aufbau identischen, rechteckförmigen Aufnahmen und die beiden rechteckförmigen Aufnahmen verbindende Schienen besteht. Hierbei weisen zwar die rechteckförmigen Aufnahmen in einer Ebene liegende Flächen zur Befestigung des Kennzeichenschildes auf, jedoch besteht der vierteilige Kennzeichenschildhalter aus zwei im Aufbau unterschiedlichen Teilen. Ein solcher Kennzeichenschildhalter ist kostenintensiv in seiner Herstellung und umständlich und zeitaufwendig zu montieren. Außerdem wirkt sich für den Kennzeichenschildhalter seine Vierteiligkeit nachteilig auf seine Festigkeit und Steifigkeit aus.

Aufgabe der Erfindung ist es, den im Gattungsbegriff beschriebenen, teleskopartig verschiebbaren Kennzeichenschildhalter derart auszubilden, daß beide Aufnahmen möglichst große und in einer Ebene liegende Flächen für die Anbringung des Kennzeichenschildes aufweisen und beide Aufnahmen in ihrem Aufbau identisch sind. Diese Aufgabe wird nach der Erfindung durch folgende Merkmale gelöst:

a) Jede der beiden rechteckförmigen Aufnahmen weist durch eine in etwa mittig und in Verschieberichtung verlaufende Stufe zwei zueinander auf unterschiedlichem Niveau liegende Flächen auf,

b) die beiden Flächen weisen einen äquidistanten Abstand zueinander auf, der mindestens der Materialdicke der rechteckförmigen Aufnahme an den beiden Flächen entspricht,

c) die beiden rechteckförmigen Aufnahmen weisen jeweils eine der beiden schlitzförmigen Ausnehmungen auf,

d) die schlitzförmigen Ausnehmungen verlaufen zwischen den beiden auf unterschiedlichem Niveau liegenden Flächen der Aufnahme und sind zur jeweiligen anderen Aufnahme hin geöffnet,

e) die Länge der beiden schlitzförmigen Ausnehmungen zusammen entspricht der Größe des maximalen Verschiebeweges des Kennzeichenschildhalters,

f) die Breite der schlitzförmigen Ausnehmungen ist größer als die Materialdicke der rechteckförmigen Aufnahmen an der Stoßfläche der Stufe.

Zwei solche im Aufbau identische Aufnahmen sind sehr leicht ineinander zu schieben. Außerdem ist die Lagerhaltung der Aufnahmen wegen ihres identischen Aufbaus sehr kostengünstig.

Weiterhin ist es vorteilhaft, wenn die rechteckförmigen Aufnahmen an ihren in Verschieberichtung verlaufenden Längsseiten aneinandergeführt sind. Durch diese zusätzliche Führung lassen sich die beiden Aufnahmen, ohne zu verhaken bzw. verkanten, ineinanderschieben.

Bei einer zweckmäßigen Ausgestaltung einer solchen Führung der Aufnahmen sind an den in Verschieberichtung verlaufenden, schmalen Längsseiten der rechteckförmigen Aufnahmen zur Rückseite des Kennzeichenschildhalters hin weisende Wandungen angeformt, wobei die auf tieferem Niveau liegende Fläche zur Verschieberichtung des Kennzeichenschildhalters um die Dicke einer der beiden Wandungen kleiner ausgeführt ist als die zu ihr auf höherem Niveau liegende Fläche. Hierbei ist es zweckmäßig, wenn die an die schmale Längsseite der auf höherem Niveau liegenden Fläche angeformte Wandung die an die schmale Längsseite der auf tieferem Niveau liegenden Fläche angeformte Wandung hintergreift. Bei einer solchen Lösung sind die beiden Aufnahmen beim Verschieben gut geführt, und der Kennzeichenschildhalter weist eine hohe Verwindungssteifigkeit auf.

Ebenfalls ist es vorteilhaft, wenn der Kennzeichenschildhalter an seinen freien Enden jeweils einen angeformten Abschnitt zur Aufnahme einer Kennzeichenschildleuchte aufweist. Diese die Kennzeichenschildleuchte aufnehmenden Abschnitte oder die Leuchten selbst können für das Kennzeichenschild als Anschlag beim Zusammenschieben der beiden Aufnahmen dienen.

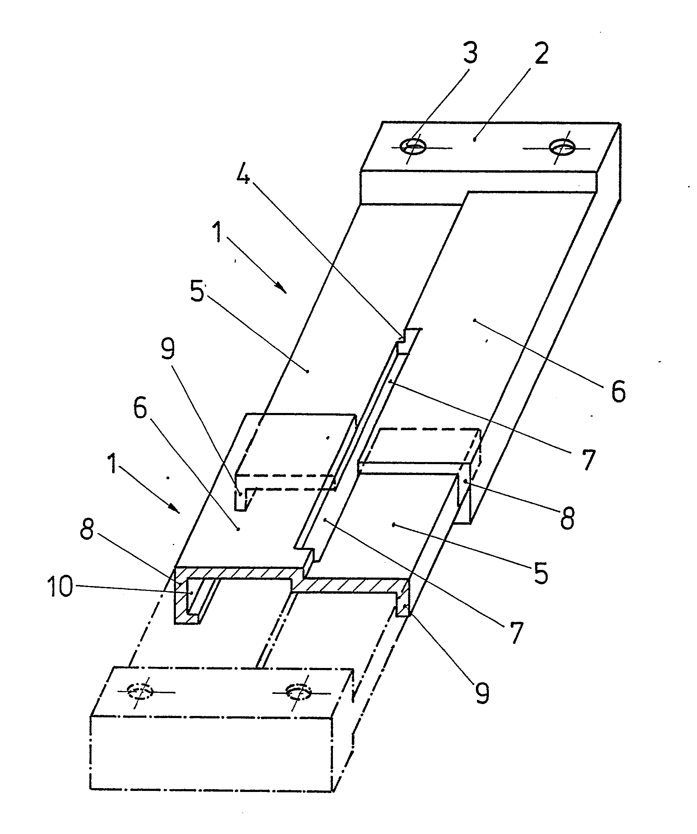

In der Zeichnung ist ein Kennzeichenschildhalter nach der Erfindung in einer perspektivischen Ansicht dargestellt.

Der Kennzeichenschildhalter besteht aus zwei im Aufbau identischen und rechteckförmigen Aufnahmen (1), die teleskopartig ineinanderschiebbar sind. Dadurch kann der Kennzeichenschildhalter der jeweiligen Länge des Kennzeichenschildes (in der Zeichnung nicht dargestellt) angepaßt werden. Der rechteckförmig ausgeführte Kennzeichenschildhalter weist an seinen Breitseiten jeweils einen angeformten Ansatz (2) auf, der als Anschlag beim Zusammenschieben der beiden rechteckförmigen Aufnahmen (1) dient und an dessen Befestigungslöchern (3) die Kennzeichenschildleuchte (in der Zeichnung nicht dargestellt) festsetzbar ist.

Die beiden im Aufbau identischen, rechteckförmigen Aufnahmen (1) des Kennzeichenschildhalters weisen durch eine in ihre Verschieberichtung und in etwa mittig verlaufende Stufe (4) zwei zueinander auf unterschiedlichem Niveau liegende Flächen (5 und 6) auf, an denen das Kennzeichenschild festsetzbar ist. Weiterhin verlaufen diese Flächen (5 und 6) parallel zueinander und weisen zueinander einen Abstand auf, der mindestens der Wandungsdicke der rechteckförmigen Aufnahmen (1) an diesen Flächen (5 und 6) entspricht. Von der dem Ansatz (2) gegenüberliegenden Schmalseite der rechteckförmige Aufnahme (1) erstreckt sich eine -schlitzförmige Ausnehmung (7) zwischen den beiden auf unterschiedlichem Niveau liegenden Flächen (5 und 6) bis in etwa zur Mitte dieser beiden Flächen. Zwei solche rechteckförmigen Aufnahmen (1) lassen sich, wie in der Zeichnung dargestellt, teleskopartig ineinanderschieben. Dabei liegt die Fläche (6) oberhalb der Fläche (5) und dient als Anlage-und Befestigungsfläche für das Kennzeichenschild. An den Längsseiten der beiden rechteckförmigen Aufnahmen ist die nach hinten weisende Wandung (8 bzw. 9) angeformt. Die Fläche (5) ist in ihrer Breite und die Wandung (9) in ihrer Höhe mindestens um die Wandungsdicke der Aufnahme (1) kleiner ausgeführt als die Breite der Fläche (6) bzw. als die Höhe der Wandung (8). Die Wandung (8) weist auf ihrer Innenseite eine Führungsnut (10) für die Wandung (9) auf. Dadurch weist der aus zwei identischen Aufnahmen (1) bestehende Kennzeichenschildhalter nach allen Seiten eine hohe Verwindungssteifigkeit auf. Auf der Rückseite des Kennzeichenschildhalters sind Befestigungsmittel (in der Zeichnung nicht dargestellt) angeformt, durch die der Kennzeichenschildhalter an der Fahrzeugkarosserie festsetzbar ist.

## Ansprüche

1. Kennzeichenschildhalter für Kraftfahrzeuge mit teleskopartiger Verschiebemöglichkeit, bestehend aus zwei rechteckförmigen Aufnahmen, die zwei in Verschieberichtung verlaufende, -schlitzförmige Ausnehmungen aufweisen, gekennzeichnet durch folgende Merkmale:

a) Jede der beiden rechteckförmigen Aufnahmen (1) weist durch eine in etwa mittig und in Verschieberichtung verlaufende Stufe (4) zwei zueinander auf unterschiedlichem Niveau liegende Flächen (5 und 6) auf,

b) die beiden Flächen (5 und 6) weisen einen äquidistanten Abstand zueinander auf, der mindestens der Materialdicke der rechteckförmigen Aufnahme (1) an den beiden Flächen (5 und 6) entspricht,

c) die beiden rechteckförmigen Aufnahmen weisen jeweils eine der beiden schlitzförmigen Ausnehmungen (7) auf,

d) die schlitzförmigen Ausnehmungen (7) verlaufen zwischen den beiden auf unterschiedlichem Niveau liegenden Flächen (5 und 6) der Aufnahme und sind zur jeweiligen anderen Aufnahme (1) hin geöffnet,

e) die Länge der beiden schlitzförmigen Ausnehmungen (7) zusammen entspricht der Größe des maximalen Verschiebeweges des Kennzeichenschildhalters,

f) die Breite der schlitzförmigen Ausnehmungen (7) ist größer als die Materialdicke der rechteckförmigen Aufnahmen (1) an der Stoßfläche der Stufe (4).

2. Kennzeichenschildhalter nach Anspruch 1, dadurch gekennzeichnet, daß die rechteckförmigen Aufnahmen (1) an ihren in Verschieberichtung verlaufenden Längsseiten aneinandergeführt sind.

3. Kennzeichenschildhalter nach Anspruch 2, dadurch gekennzeichnet, daß an den in Verschieberichtung verlaufenden schmalen Längsseiten der rechteckförmigen Aufnahmen (1) zur Rückseite des Kennzeichenschildhalters hin weisende Wandungen (8 bzw. 9) angeformt sind, wobei die auf tieferem Niveau liegende Fläche (5) quer zur Verschieberichtung des Kennzeichenschildhalters um die Dicke einer der beiden Wandungen (8 bzw. 9) kleiner ausgeführt ist als die zu ihr auf höherem Niveau liegende Fläche (6).

4. Kennzeichenschildhalter nach Anspruch 3, dadurch gekennzeichnet, daß die an die schmale Längsseite der auf höherem Niveau liegenden Fläche (6) angeformte Wandung (8) die an die schmale Längsseite der auf tieferem Niveau liegenden Fläche (5) angeformte Wandung (9) hintergreift.

5. Kennzeichenschildhalter nach Anspruch 4, dadurch gekennzeichnet, daß die Wandung (8) auf ihrer Innenseite eine Führungsnut (10) für die Wandung (9) aufweist.

6. Kennzeichenschildhalter nach einem der vorstehenden Ansprüche, dadurch gekennzeichnet, daß der Kennzeichenschildhalter an seinen freien Enden jeweils einen angeformten Abschnitt (2) zur Aufnahme einer Kennzeichenschildleuchte aufweist.